# EUROPÄISCHE PATENTSCHRIFT

(11) **EP 1 664 693 B1**
(45) Veröffentlichungstag und Bekanntmachung des Hinweises auf die Patenterteilung: **07.05.2008**
(21) Anmeldenummer: 04764311.9
(22) Anmeldetag: 20.08.2004
(51) Int. Cl.: G01J 5/04, G01J 5/06, G01K 1/08

(54) **BEHEIZBARER INFRAROT-SENSOR UND INFRAROT-THERMOMETER MIT EINEM DERARTIGEN INFRAROT-SENSOR**
HEATABLE INFRARED SENSOR AND INFRARED THERMOMETER COMPRISING SUCH AN INFRARED SENSOR
CAPTEUR A INFRAROUGE CHAUFFABLE, ET THERMOMETRE A INFRAROUGE POURVU DE CE CAPTEUR A INFRAROUGE

(30) Priorität: 09.09.2003 DE 10341433
(43) Veröffentlichungstag der Anmeldung: 07.06.2006
(73) Patentinhaber: KAZ Europe SA, 1003 Lausanne (CH)
(72) Erfinder: SCHARF, Stefan, 13581 Berlin (DE); NETH, Stefan, 61118 Bad Vilbel (DE); KRAUS, Bernhard, 35619 Braunfels (DE)
(74) Vertreter: Grünecker, Kinkeldey, Stockmair & Schwanhäusser Anwaltssozietät
(86) Internationale Anmeldenummer: PCT/EP2004/009327
(87) Internationale Veröffentlichungsnummer: WO 2005/029021

(56) Entgegenhaltungen:
- EP-A- 1 136 801
- GB-A- 2 148 676
- US-A- 4 035 613
- US-A- 5 010 315

## Beschreibung

Die vorliegende Erfindung betrifft ein Fieberthermometer insbesondere zur Temperaturmessung im Ohr, mit einem Infrarot-Sensor mit zumindest einem in einem elektrisch beheizbaren Sensorgehäuse angeordneten Infrarot-Sensorelement .

Ein entsprechender Infrarot-Sensor ist beispielsweise aus der EP 1 081 475 A2 bekannt. Der bekannte Infrarot-Sensor besitzt ein oder mehrere Heiz-/Kühlelemente, die mit dem Sensorgehäuse und/oder einem infrarotdurchlässigen Fenster des Sensorgehäuses wärmeleitend verbunden sind. Die Heiz-/Kühlelemente können beispielsweise ein als NTC- oder PTC-Widerstand oder ein als Transistor ausgebildetes Heizelement oder auch ein als Peltierelement ausgebildetes Heiz- und Kühlelement umfassen. Sie können auch aus einer Folie, wie z.B. eine Polyimidfolie bestehen, auf die eine leiterbahnförmige Metallschicht, beispielsweise aus Aluminium, Kupfer, Gold oder einer Chrom-Nickel-Legierung, oder eine Silber-Graphit-Paste aufgebracht ist. Das Sensorgehäuse und das infrarotdurchlässigen Fenster bestehen aus Materialien hoher Wärmeleitfähigkeit, beispielsweise das Gehäuse aus Kupfer und das Fenster aus Silizium, um auftretende Temperaturgradienten möglichst gering zu halten. Der bekannte Infrarot-Sensor wird insbesondere in der Meßspitze eines Infrarot-Thermometers zur Temperaturmessung im Ohr eingesetzt.

Ein Heizelement aus Keramik, bei dem der Heizdraht und ein Wärmesensor in dem Keramikblock eingeschlossen sind, wird in GB 2 148 676 A beschrieben. US-Patent 5 010 315 beschreibt einen Sensor für thermische Strahlung, bei dem auf ein Keramiksubstrat unter anderem Heizleiterbahnen aufgebracht sind.

Die Aufgabe der vorliegenden Erfindung besteht in der Schaffung eines konstruktiv einfachen Infrarot-Sensors mit einer platzsparenden elektrischen Heizeinrichtung. Die Aufgabe besteht auch in der Schaffung eines Infrarot-Thermometers mit einem derartigen Infrarot-Sensor.

Diese Aufgabe wird erfindungsgemäß durch in Infrarot-Thermometer nach Anspruch 1 gelöst. Bevorzugte erfindungsgemäße Ausführungsformen sind den jeweils zugehörenden Unteransprüchen zu entnehmen.

Bei dem erfindungsgemäßen Infrarot-Sensor umfasst das Sensorgehäuse ein Keramiksubstrat mit einer aufgebrachten elektrischen Heizbahnstruktur. Die elektrische Heizeinrichtung ist somit praktisch in das Sensorgehäuse integriert, so dass zusätzliche separate Heizelemente - wie nach dem Stand der Technik - entfallen und entsprechend auch keine aufwendigen elektrischen Kontaktierungsverfahren erforderlich sind. Durch eine geeignete Ausführung der Heizbahnstruktur, die ein oder mehrere bedarfsgerecht ausgebildete leiterbahnförmige Heizbahnen umfassen kann, kann die Wärmeverteilung innerhalb des Sensorgehäuses optimiert werden. Das Keramiksubstrat umfasst vorzugsweise eine Keramik hoher Wärmeleitfähigkeit, beispielsweise eine Aluminium- oder Berylliumoxid-Keramik oder eine Aluminiumnitrid-Keramik, sodaß unerwünschte Temperaturgradienten im Sensorgehäuse minimiert werden. Das Keramiksubstrat besitzt zudem einen hohen elektrischen Isolationswiderstand, so dass die zumindest eine Heizbahn platzsparend untergebracht werden kann, d.h. auch nahe an eingebaute elektrische oder elektronische Bauelemente herangeführt werden kann. Durch eine bedarfsgerechte Steuerung der jeweiligen elektrischen Heizleistung kann eine Soll-Gehäusetemperatur erreicht und erforderlichenfalls auch stabilisiert werden.

Außer der leiterbahnförmigen Heizbahnstruktur kann das Keramiksubstrat auch noch elektrische Leiterbahnen und Durchkontaktierungen als elektrische Anschluß- oder Kontakteinrichtungen für die im Sensorgehäuse eingebauten elektrischen oder elektronischen Bauelemente umfassen. Die elektrischen Heizbahnen und die elektrischen Leiterbahnen sind hierbei vorzugsweise als Dickschicht-Bahnen ausgebildet, die auf bekannte Art und Weise auf das Keramiksubstrat aufgebracht werden. Durch gezielte Variation der elektrischen Leitfähigkeit der Widerstandspaste für die elektrischen Heizbahnen kann der elektrische Widerstand dieser Heizbahnen hierbei bedarfsgerecht an die Geometrie des Sensorgehäuses angepasst und die jeweils erforderliche notwendige Heizleistung optimal eingestellt werden. Durch eine Dickschicht-Hybridtechnologie können auch die erforderlichen Durchkontaktierungen wesentlich kleiner ausgeführt werden als beispielsweise die herkömmlichen Glasdurchführungen oder Einglasungen bei der TO-Gehäusetechnologie, so dass bei gleichem Platzbedarf eine merklich größere Anzahl an elektrischen Verbindungen nach außen führbar ist. Durch die Einglasungen ist zudem der Platz im Inneren eines TO-Gehäuses recht beschränkt, so dass dort aus Platzgründen eine Heizung nur schwer zu integrieren ist. Die vorliegende Dickschicht-Heizbahnstruktur bildet hingegen eine äußerst platzsparende und effektive elektrische Heizeinrichtung, die einfach auf einen geeigneten Keramikbereich des Sensorgehäuses aufgebracht wird und sich damit problemlos in ein Sensorgehäuse integrieren lässt.

Der vorliegende Infrarot-Sensor ist insbesondere für den Einsatz in einem Infrarot-Thermometer geeignet. So kann er beispielsweise in die Meßspitze eines herkömmlichen Infrarot-Fieberthermometers zur Fiebermessung im Ohr eingebaut werden. Hierbei wird er direkt am vorderen Ende der Meßspitze angeordnet, um dieses vordere Ende durch Aufheizen des Infrarot-Sensors auf eine gewünschte Temperatur zu bringen. Beim Einführen der entsprechend temperierten Meßspitze in den Ohrkanal eines Benutzers wird dann das dort herrschende thermische Gleichgewicht praktisch nicht gestört, so dass Meßfehler weitestgehend vermieden werden. Die Meßspitze kann hierbei eine an sich bekannte Form oder einen an sich bekannten Aufbau haben, insbesondere kann sie auch biegsam ausgebildet sein.

Das Keramiksubstrat mit der aufgebrachten Heizbahnstruktur ist vorzugsweise als Gehäuseboden des Sensorgehäuses ausgebildet, auf dem zumindest ein Infrarot-Sensorelement zur Umwandlung der erfassten Infrarotstrahlung in ein elektrisches Ausgangssignal, wie z.B. ein Thermopile-Sensor, und sonstige elektrischen und elektronischen Bauteile angeordnet sind. Die elektrischen Leiterbahnen für diese Bauteile und die elektrischen Heizbahnen können sowohl auf der Oberseite als auch auf der Unterseite des Gehäusebodens realisiert werden, wobei die elektrische Verbindung zwischen Ober- und Unterseite über Durchkontaktierungen im Gehäuseboden erfolgt. Die Geometrie der einzelnen Bahnen kann hierbei optimal an die Geometrie der Oberseite und der Unterseite des Gehäusebodens angepasst werden. Durch die Verwendung eines Keramiksubstrats anstatt einer Metalllegierung kann der Gehäuseboden merklich dünner ausgebildet sein als beispielsweise ein herkömmlicher TO-Gehäuseboden.

Das Keramiksubstrat weist hierbei vorzugsweise eine sehr symmetrische Grundfläche auf, wie z.B. eine runde, ovale, quadratische, sechs- oder achteckige Grundfläche, da es dann - im Gegensatz zur TO-Gehäusetechnologie - bei der Montage der einzuhäusenden Bauelemente und des Deckels kostensparend im Nutzen verarbeitet werden kann. Je nach Bedarf kann es jedoch auch beliebige andere Formen aufweisen.

Zur bedarfsgerechten Steuerung der elektrischen Heizleistung der Heizbahnen und zur genauen Einstellung der Gehäusetemperatur umfasst der erfindungsgemäße Infrarot-Sensor oder das einen solchen Infrarot-Sensor umfassende erfindungsgemäße Infrarot-Thermometer vorzugsweise auch noch eine geeignete Steuerungseinrichtung. Durch diese ist die Temperatur des Infrarot-Sensors anhand beispielsweise bestimmter Kenngrößen der zumindest einen elektrischen Heizbahn oder des zumindest einen Infrarot-Sensorelements ermittelbar. Gegebenenfalls ist die Temperatur des Infrarot-Sensors auch aus den Meßsignalen zumindest eines separaten Temperatursensors bestimmbar. Die Steuerungseinrichtung steuert oder regelt die für das Aufheizen oder Konstanthalten der Temperatur jeweils erforderliche Zufuhr an elektrischer Energie. Zu diesem Zweck kann ein einstellbarer Temperatur-Sollwert vorgegeben sein. Die Steuerungseinrichtung und die zumindest eine elektrische Heizbahn sind mit einer elektrischen Energiequelle, wie beispielsweise einer Batterie, verbindbar.

Die erfindungsgemäße Idee der Verwendung eines Keramiksubstrats mit einer aufgebrachten Heizbahnstruktur zum Aufheizen eines Gehäuses auf eine gewünschte Temperatur ist jedoch nicht nur auf diesen speziellen Anwendungsbereich beschränkt, sondern kann vorteilhafterweise auch bei einer Vielzahl von zu temperierenden gehäusten elektrischen oder elektronischen Bauelementen eingesetzt werden.

Als Beispiel seien hier die bereits erwähnten TO-Gehäuse genannt, bei denen üblicherweise Gehäuseböden aus Stahl oder anderen Metallegierungen, wie z.B. COVAR (18 % Co, 28 % Ni und 54 % Fe) als Bodenmaterial eingesetzt werden. Da diese jedoch nur eine relativ geringe Wärmeleitfähigkeit besitzen, verlaufen gegebenenfalls erforderliche Aufheizvorgänge nur relativ langsam und inhomogen. Die Verwendung eines geeigneten Keramiksubstrats mit einer aufgebrachten elektrischen Heiz- und Leiterbahnstruktur als Bodenmaterial hingegen ermöglicht nicht nur merklich schnellere Aufheizvorgänge sondern führt auch zu einer gleichmäßigeren Temperaturverteilung im Gehäuse. Da die Heizung zudem äußerst platzsparend praktisch im Gehäuse integriert ist, ist im Unterschied zu einem TO-Gehäuse auch kein separates Heizelement erforderlich, das mittels eines geeigneten Verfahrens kontaktiert werden müßte.

Weitere Merkmale und Vorteile der vorliegenden Erfindung ergeben sich nicht nur aus den zugehörenden Ansprüchen - für sich und/oder in Kombination - sondern auch aus der nachfolgenden Beschreibung eines bevorzugten erfindungsgemäßen Ausführungsbeispiels in Verbindung mit den zugehörenden Zeichnungen, in den denen gleiche Bauteile mit gleichen Bezugszeichen versehen sind. Es zeigen in schematischer Darstellung:
- Fig. 1: eine Draufsicht auf einen beispielhaften erfindungsgemäßen Gehäuseboden eines Sensorgehäuses; und
- Fig. 2: eine Unteransicht des Gehäusebodens gemäß Fig 1.

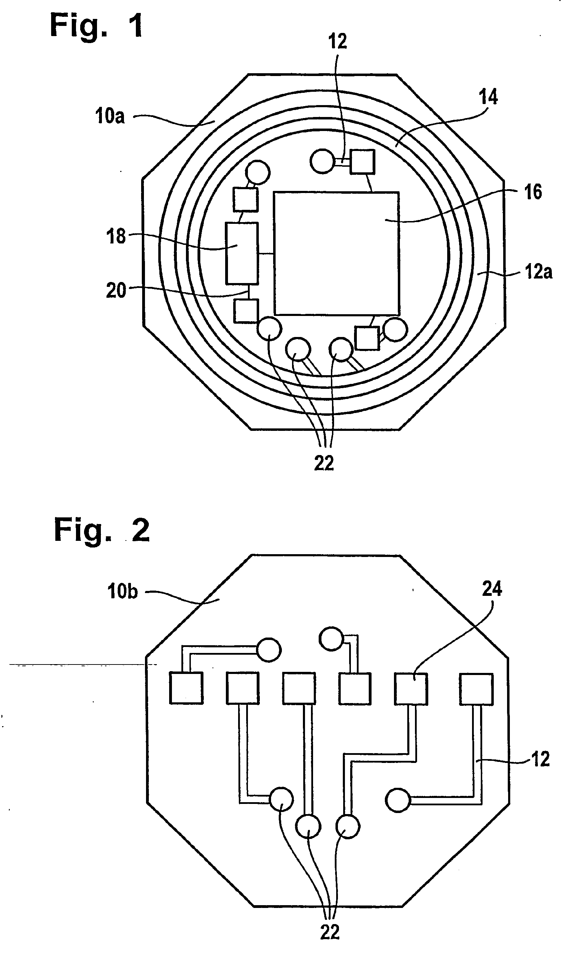

Der in Figur 1 dargestellte Gehäuseboden 10 besteht aus einem elektrisch isolierenden und gut wärmeleitenden Keramiksubstrat. Das Keramiksubstrat umfaßt beispielsweise eine Aluminium- oder Berylliumoxid-Keramik oder eine Aluminiumnitrid-Keramik oder dergleichen.

Der Gehäuseboden 10 besitzt eine achteckige Grundfläche, sodaß eine kostengünstige Nutzenfertigung und -trennung gewährleistet ist. Bei Bedarf kann er jedoch - je nach Anwendungszweck - gegebenenfalls auch eine andere beliebige Form aufweisen, wobei aus den genannten Gründen in der Praxis insbesondere runde, ovale, quadratische oder sechseckige Grundflächen zum Einsatz kommen.

Auf der Oberseite 10a des Gehäusebodens 10 ist eine periphere ringförmige Leiterbahn 12a als Kontaktfläche für einen (in den Figuren nicht dargestellten) entsprechend geformten zugehörenden Gehäusedeckel ausgebildet, der ein infrarotdurchlässiges Fenster ausweist. Die Verbindung zwischen dem Gehäuseboden 10 und dem zugehörenden Gehäusedeckel kann hierbei beispielsweise durch Kleben erfolgen. Zur Optimierung des Wärmeübergangs kann ein besonders gut wärmeleitfähiger Klebstoff eingesetzt werden.

Beabstandet zu der Kontaktbahn 12a erstreckt sich eine etwas kleinere, konzentrische ringförmige Heizbahn 14. Diese ist mit einer (nicht dargestellten) Steuerungseinrichtung elektrisch verbunden, durch welche die elektrische Heizleistung der Heizbahn 14 bedarfsgerecht steuerbar ist. Die jeweils erforderliche elektrische Heizleistung wird hierbei von einer (ebenfalls nicht dargestellten) elektrischen Batterie geliefert.

Die Heizbahn 14 umgibt einen in der Mitte des Gehäusebodens 10 angeordneten Infrarot-Sensor 16 (vorzugsweise ein Thermopile-Sensor) und weitere elektronische Bauelemente, die einen elektronischen Schaltkreis 18 und mehrere gedruckte Leiterbahnen 12 umfassen, welche über Drahtbondverbindungen 20 miteinander verbunden sind. Darüber hinaus sind auch noch mehrere Durchkontaktierungen 22 als vakuumdichte elektrische Verbindung zu der in Fig. 2 dargestellten Unterseite 10b des Gehäusebodens 10 vorgesehen.

Der Thermopile-Sensor 16 ist mit einer (nicht dargestellten) Meßelektronik zur Erfassung und Auswertung seiner Temperatursignale verbunden. Diese wertet auch die Signale eines weiteren Temperatursensors aus, der vorzugsweise aus der Heizleiterbahn 14 besteht. Die ausgewerteten Temperatursignale können über (eine nicht dargestellte) Anzeigeeinrichtung in Form eines Temperaturmeßwerts angezeigt werden.

Die in Fig. 2 dargestellte Unterseite 10b des Gehäusebodens 10 umfasst ebenfalls eine entsprechende Anzahl an Durchkontaktierungen 22, die mit zugeordneten gedruckten Leiterbahnen 12 verbunden sind. Diese sind bereichsweise als Verbindungspads 24 ausgebildet.

Diese können mittels üblicher Technologien, wie z.B. Löten oder Kleben, mit zugeordneten Schaltungsträgern verbunden werden.

Die elektrische Heizbahn 14 und die elektrischen Leiterbahnen 12 sind als gedruckte Dickschichtbahnen ausgebildet, wobei die elektrischen Leiterbahnen 12 oder die elektrischen Verbindungen aus entsprechend niederohmigen Dickschicht-Pasten und die elektrische Heizbahn 14 aus höherohmigen Dickschicht-Pasten bestehen. Bei einer bevorzugten Ausführung eines erfindungsgemäßen Infrarot-Sensors ist die Heizleiterbahn 14 nicht auf der Oberseite 10a sondern auf der Unterseite 10b des Gehäusebodens angeordnet. Es können jedoch auch sowohl auf der Oberseite 10a als auch auf der Unterseite 10b des Gehäusebodens 10 Heizleiterbahnen 14 bzw. 12 aufgebracht sein.

Der dargestellte Gehäuseboden 10 mit den darauf angeordneten elektrische oder elektronischen Bauelementen bildet zusammen mit einem (nicht dargestellten) zugehörenden Gehäusedeckel einen Infrarot-Sensor, beispielsweise zum Einbau in die Meßspitze eines Infrarot-Fieberthermometers zur Temperaturmessung im Ohr. Der Gehäuseboden dient einer vakuumdichten Durchführung elektrischer Signale aus dem inneren des Sensorgehäuses nach außen.

## Patentansprüche

1. Infrarot-Fieberthermometer, insbesondere zur Fiebermessung im Ohr, mit einem Infrarot-Sensor mit zumindest einem in einem elektrisch beheizbaren Sensorgehäuse angeordneten Infrarot-Sensorelement (16),
**dadurch gekennzeichnet, dass**
das Sensorgehäuse ein Keramiksubstrat (10) mit zumindest einer leiterbahnförmigen elektrischen Heizbahn (14) umfasst.

2. Infrarot-Fieberthermometer nach Anspruch 1,
**dadurch gekennzeichnet, dass**
das Keramiksubstrat (10) eine gut wärmeleitende und elektrisch isolierende Keramik umfasst.

3. Infrarot-Fieberthermometer nach Anspruch 2,
**dadurch gekennzeichnet, dass**
die Keramik (10) eine Aluminiumoxid-, Aluminiumnitrid- oder Berylliumoxid-Keramik umfasst.

4. Infrarot-Fieberthermometer nach einem der vorhergehenden Ansprüche,
**dadurch gekennzeichnet, dass**
das Keramiksubstrat (10) den Boden des Sensorgehäuses bildet.

5. Infrarot-Fieberthermometer nach einem der vorhergehenden Ansprüche,
**dadurch gekennzeichnet, dass**
die elektrische Heizbahn (14) als Dickschichtbahn ausgebildet ist.

6. Infrarot-Fieberthermometer nach einem der vorhergehenden Ansprüche,
**dadurch gekennzeichnet, dass**
das Keramiksubstrat (10) elektrische Leiterbahnen (12) und Durchkontaktierungen (22) umfasst.

7. Infrarot-Fieberthermometer nach Anspruch 6,
**dadurch gekennzeichnet, dass**
die elektrischen Leiterbahnen (12) als Dickschichtbahnen ausgebildet sind.

8. Infrarot-Fieberthermometer nach einem der vorhergehenden Ansprüche,
**dadurch gekennzeichnet, dass**
er zumindest einen separaten Temperatursensor umfasst und/oder dass das zumindest eine Infrarot-Sensorelement (16) als Temperatursensor verwendbar ist.

9. Infrarot-Fieberthermometer nach einem der Ansprüche 1 bis 8,
**gekennzeichnet durch,**
eine Steuerungseinrichtung zur Steuerung der elektrischen Heizleistung der zumindest einen elektrischen Heizbahn (14).

10. Infrarot-Fieberthermometer nach Anspruch 9,
**dadurch gekennzeichnet, dass**
durch die Steuerungseinrichtung die Temperatur des Infrarot-Sensors anhand bestimmter Kenngrößen der zumindest einen elektrischen Heizbahn (14) oder des zumindest einen Infrarot-Sensorelements (16) oder des zumindest einen Temperatursensors ermittelbar ist.

## Claims

1. Infrared thermometer, particularly for measuring temperature in the ear, with an infrared sensor with at least one infrared sensor element (16) arranged in an electrically heatable sensor housing,
**characterised in that**
the sensor housing comprises a ceramic substrate (10) with at least one electrical heating track (14) shaped as a conductive track.

2. Infrared thermometer according to claim 1
**characterised in that**
the ceramic substrate (10) comprises a high heat conducting and electrically insulating ceramic.

3. Infrared thermometer according to claim 2
**characterised in that**
the ceramic (10) comprises an aluminium oxide, aluminium nitride or beryllium oxide ceramic.

4. Infrared thermometer according to one of the preceding claims
**characterised in that**
the ceramic substrate (10) forms the floor of the sensor housing.

5. Infrared thermometer according to one of the preceding claims
**characterised in that**
the electrical heating track (14) is constructed as a thick-film track.

6. Infrared thermometer according to one of the preceding claims
**characterised in that**
the ceramic substrate (10) comprises electrical conductor tracks (12) and through-hole contacts (22).

7. Infrared thermometer according to claim 6
**characterised in that**
the electrical conductive tracks (12) are formed as thick-film tracks.

8. Infrared thermometer according to one of the preceding claims
**characterised in that**
it comprises at least one separate temperature sensor and/or that the at least one infrared sensor element (16) can be used as temperature sensor.

9. Infrared thermometer according to one of claims 1 to 8
**characterised by**
a control device for controlling the electrical heating power of the at least one electrical heating track (14).

10. Infrared thermometer according to claim 9
**characterised in that**
by means of the control device the temperature of the infrared sensor cam be determined using predetermined parameters of the at least one electrical heating track (14) or of the at least one infrared sensor element (16) or of the at least one temperature sensor.

## Revendications

1. Thermomètre médical à infrarouge, en particulier pour mesurer la fièvre dans l'oreille, comprenant un capteur infrarouge avec au moins un élément capteur à infrarouge (16) disposé dans un boîtier de capteur pouvant être chauffé électriquement,
**caractérisé en ce que**
le boîtier de capteur comporte un substrat céramique (10) avec au moins une piste chauffante (14) électrique en forme de piste conductrice.

2. Thermomètre médical à infrarouge selon la revendication 1,
**caractérisé en ce que**
le substrat céramique (10) comporte une céramique qui conduit bien la chaleur et qui isole de l'électricité.

3. Thermomètre médical à infrarouge selon la revendication 2,
**caractérisé en ce que**
la céramique (10) comporte une céramique d'oxyde d'aluminium, une céramique de nitrure d'aluminium ou une céramique d'oxyde de béryllium.

4. Thermomètre médical à infrarouge selon l'une quelconque des revendications précédentes,
**caractérisé en ce que**
le substrat céramique (10) forme le fond du boîtier de capteur.

5. Thermomètre médical à infrarouge selon l'une quelconque des revendications précédentes,
**caractérisé en ce que**
la piste chauffante (14) électrique est conçue comme piste à couche épaisse.

6. Thermomètre médical à infrarouge selon l'une quelconque des revendications précédentes,
**caractérisé en ce que**
le substrat céramique (10) comporte des pistes conductrices (12) électriques et des connexions transversales (22).

7. Thermomètre médical à infrarouge selon la revendication 6,
**caractérisé en ce que**
les pistes conductrices (12) électriques sont conçues sous forme de piste à couche épaisse.

8. Thermomètre médical à infrarouge selon l'une quelconque des revendications précédentes,
**caractérisé en ce que**
il comporte au moins un capteur de température séparé et/ou **en ce que** le au moins un élément capteur à infrarouge (16) peut être utilisé comme capteur de température.

9. Thermomètre médical à infrarouge selon l'une quelconque des revendications 1 à 8,
**caractérisé par**
un dispositif de commande pour la commande de la puissance de chauffage électrique de la au moins une piste chauffante (14) électrique.

10. Thermomètre médical à infrarouge selon la revendication 9,
**caractérisé en ce que**
la température du capteur à infrarouge peut être déterminée par le dispositif de commande à l'aide de certaines grandeurs caractéristiques de la au moins une piste chauffante (14) électrique ou du au moins un élément capteur à infrarouge (16) ou du au moins un capteur de température.
